(19) Europäisches Patentamt

European Patent Office

Office européen des brevets

(11) **EP 1 109 866 B1**

(12) **EUROPÄISCHE PATENTSCHRIFT**

(45) Veröffentlichungstag und Bekanntmachung des Hinweises auf die Patenterteilung:
**09.10.2002 Patentblatt 2002/41**

(51) Int Cl.⁷: **C09C 1/56**, C08K 3/04, C08K 9/02

(21) Anmeldenummer: **99944554.7**

(22) Anmeldetag: **28.08.1999**

(86) Internationale Anmeldenummer:
**PCT/EP99/06365**

(87) Internationale Veröffentlichungsnummer:
**WO 00/014162 (16.03.2000 Gazette 2000/11)**

(54) **RUSS, VERFAHREN ZU SEINER HERSTELLUNG SOWIE SEINE VERWENDUNG**

CARBON BLACK, METHOD FOR PRODUCING CARBON BLACK AND USE OF THE SAME

NOIR DE CARBONE, SON PROCEDE DE PRODUCTION ET SON UTILISATION

(84) Benannte Vertragsstaaten:
**AT BE CH CY DE DK ES FI FR GB GR IE IT LI LU MC NL PT SE**

(30) Priorität: **05.09.1998 DE 19840663**

(43) Veröffentlichungstag der Anmeldung:
**27.06.2001 Patentblatt 2001/26**

(73) Patentinhaber: **Degussa AG**
**40474 Düsseldorf (DE)**

(72) Erfinder:
- **VOGLER, Conny**
  **D-53332 Bornheim (DE)**
- **FORSTER, Frank**
  **D-63825 Schöllkrippen (DE)**
- **VOGEL, Karl**
  **D-63755 Alzenau (DE)**
- **FREUND, Burkhard**
  **D-50374 Erftstadt (DE)**

(56) Entgegenhaltungen:
EP-A- 0 799 866          WO-A-96/37547
DE-A- 19 521 565

EP 1 109 866 B1

**Beschreibung**

Ruße sind bekannt aus Ullmanns Enzyklopädie der technischen Chemie, 4. Auflage (1977), Band 14, Seiten 633 bis 648.

Die wichtigsten Ruß-Herstellverfahren beruhen auf der oxidativen Pyrolyse von kohlenstoffhaltigen Rußrohstoffen. Hierbei werden die Rußrohstoffe bei hohen Temperaturen in Anwesenheit von Sauerstoff unvollständig verbrannt. Zu diesen Ruß-Herstellverfahren gehören zum Beispiel das Furceruß-Verfahren, das Gasrußverfahren und das Flammruß-Verfahren. Als Rußrohstoffe werden überwiegend mehrkernige aromatische Rußöle eingesetzt.

Ruße werden als Füllstoff und als Verstärker bei der Herstellung von Gummimischungen für die Reifenindustrie eingesetzt. Typische Gummimischungen enthalten neben Naturund/oder Synthesekautschuk Ruß, Mineralöl und weitere Hilfsstoffe sowie Schwefel als Vulkanisationsmittel.

Ruße beeinflussen den Abriebwiderstand, den Rollwiderstand sowie das Naßrutschverhalten der aus diesen Gummimischungen hergestellten Reifen. Für Gummimischungen, die als Laufflächen von Reifen dienen, sogenannte Laufflächenmischungen, wird ein hoher Abriebwiderstand bei gleichzeitig möglichst geringem Rollwiderstand und gutem Naßrutschverhalten gefordert. Ein geringer Rollwiderstand führt zu einem geringen Kraftstoffverbrauch des Kraftfahrzeugs.

Rollwiderstand und Naßrutscheigenschaften werden durch das viskoelastische Verhalten der Laufflächenmischung beeinflußt. Bei periodischer Verformung kann das viskoelastische Verhalten durch den mechanischen Verlustfaktor $\tan\delta$ und im Falle von Dehnung oder Stauchung durch den dynamischen Dehnmodul $|E^*|$ beschrieben werden. Beide Größen sind stark temperaturabhängig.

Das Naßrutschverhalten der Laufflächenmischung wird mit dem Verlustfaktor $\tan\delta_0$ bei 0°C, und der Rollwiderstand mit dem Verlustfaktor $\tan\delta_{60}$ bei 60°C korreliert. Je höher der Verlustfaktor bei der tiefen Temperatur ist, um so besser ist gewöhnlich das Naßrutschverhalten der Reifenmischung. Zur Verminderung des Rollwiderstandes wird dagegen ein möglichst kleiner Verlustfaktor bei der hohen Temperatur gefordert.

Der Abriebwiderstand und die viskoelastischen Eigenschaften, also auch der Verlustfaktor der Laufflächenmischungen, werden wesentlich durch die Eigenschaften der eingesetzten Verstärkerruße bestimmt.

Eine wichtige Kennzahl für den kautschukwirksamen Oberflächenanteil des Rußes ist die spezifische Oberfläche, insbesondere die CTAB-Oberfläche beziehungsweise STSA-Oberfläche. Mit zunehmender CTAB-Oberfläche beziehungsweise STSA-Oberfläche steigen Abriebwiderstand und $\tan\delta$ an.

Weitere wichtige Rußparameter sind die DBP-Absorption als Maßzahl für die Ausgangsstruktur und die 24M4-DBP-Absorption als Maß für die nach mechanischer Beanspruchung des Rußes noch verbleibende Reststruktur.

Für Laufflächenmischungen sind Ruße geeignet, die CTAB-Oberflächen zwischen 80 und 180 m$^2$/g und 24M4-DBP-Absorptionswerte zwischen 80 und 140 ml/100 g aufweisen.

Es ist bekannt, daß ASTM-Ruße die Temperaturabhängigkeit des Verlustfaktors $\tan\delta$ nicht derart beeinflussen können, daß die Laufflächenmischung bei gleichem oder besserem Naßrutschverhalten einen geringeren Rollwiderstand aufweist. Die erwünschte Verringerung des Rollwiderstandes ist im bekanntermaßen direkt mit einer Verschlechterung des Naßrutschverhaltens gekoppelt. Ruße, die einen geringen Rollwiderstand aufweisen, werden als sogenannte "low hysteresis"-Ruße bezeichnet.

Weiterhin ist bekannt, daß der Rollwiderstand von Reifen durch ein Ersetzen des Rußes durch Kieselsäure vermindert werden kann (EP 0 447 066 A1). Um die Kieselsäure mit den Polymerbausteinen des Kautschuks zu verbinden, werden Silan-Kopplungsreagenzien eingesetzt. Kieselsäurehaltige Gummimischungen weisen einen um bis zu 50 % verminderten Verlustfaktor $\tan\delta_{60}$ auf.

Aufgabe der vorliegenden Erfindung ist es, Ruße zur Verfügung zu stellen, die Gummimischungen aus Naturkautschuk oder Synthesekautschuk oder Mischungen davon einen verminderten Rollwiderstand bei gleichzeitig verbessertem oder gleichem Naßrutschverhalten und Abriebwiderstand verleihen.

Gegenstand der Erfindung ist ein Ruß, welcher eine STSA-Oberfläche zwischen 20 und 180 m$^2$/g, eine 24M4-DBP-Absorption zwischen 40 und 140 ml/100 g, eine spezifische BET-Oberfläche zwischen 20 und 250 m$^2$/g und einen Gehalt von 0,01 bis 20 Gew.-% Silizium, bezogen auf sein Gesamtgewicht, aufweist, welcher dadurch gekennzeichnet ist, daß er in Gummimischungen ein Verhältnis von $\tan\delta_0/\tan\delta_{60}$ von größer 3,37 - 0,0068·STSA aufweist.

In einer Ausführungsform der Erfindung kann der Ruß neben Silicium noch 0,01 bis 1 Gew.-% Stickstoff enthalten.

Das Silizium wird beim Herstellungsprozeß in die Rußaggregate eingebracht. Zu diesem Zweck können Silikonöle in den Rußrohstoff eingemischt werden.

Die Ausgangsverbindung hat nur einen geringen Einfluß auf die Einbindung der Siliziumatome in die Rußaggregate. Mit der Röntgenphotoelektronenspektrometrie (XPS) und der Sekundärionenmassenspektrometrie (SIMS) kann gezeigt werden, daß die Siliziumatome oxidisch gebunden und in den Rußaggregaten verteilt sind. Die oxidische Bindung besteht zum überwiegenden Teil aus Siliziumdioxid. Einen weiteren Anteil bilden Silanolgruppen. Während die Silanolgruppen sich im wesentlichen an der Oberfläche der Rußaggregate befinden, ist Siliziumdioxid gleichmäßig über den Querschnitt der Aggregate verteilt.

In einer Ausführungsform der Erfindung kann das Silicium in den oberflächennahen Bereichen der Rußaggregate angereichert sein.

Die siliziumhaltigen Gruppen an der Oberfläche der Rußaggregate beeinflussen nach Einarbeitung in Gummimischungen die Wechselwirkung des Füllstoffes mit den polymeren Kautschukkomponenten. Zur kovalenten Anbindung der Silanolgruppen der Ruße an die Mischungspolymere können den Gummimischungen bifunktionelle Silane, wie zum Beispiel Si69® (Bis(3-triethoxysilylpropyl)tetrasulfan) von Degussa, als Silankopplungsreagenz zugemischt werden.

Die mit den erfindungsgemäßen siliziumhaltigen Rußen hergestellten Laufflächenmischungen zeigen ohne Zusatz eines Kopplungsreagenzes einen erhöhten Wert von $\tan\delta_0$ und einen verminderten Wert von $\tan\delta_{60}$ gegenüber bekannten Rußen mit gleicher spezifischer Oberfläche und Struktur. Diese Werte entsprechen einem deutlich verbesserten Naßrutschverhalten bei gleichzeitig deutlich vermindertem Rollwiderstand der Lauffläche. Durch Zusatz bifunktioneller Silane läßt sich der Rollwiderstand der Gummimischungen weiter verbessern, das heißt, weiter verringern.

Die erfindungsgemäßen Ruße können mittels dem Furnaceruß-Verfahren gemäß DE 195 21 565 A1 hergestellt werden.

Gemäß dem Furnaceruß-Verfahren wird die oxidative Pyrolyse des Rußrohstoffes in einem mit hochfeuerfestem Material ausgekleideten Reaktor durchgeführt. In einem derartigen Reaktor können drei Zonen, die längs der Reaktorachse hintereinander liegen und nacheinander von den Reaktionsmedien durchströmt werden, voneinander unterschieden werden.

Die erste Zone, die sogenannte Verbrennungszone, umfaßt im wesentlichen die Brennkammer des Reaktors. Hier wird ein heißes Prozeßgas erzeugt, indem ein Brennstoff, in der Regel Kohlenwasserstoffe, mit einem Überschuß an vorgewärmter Verbrennungsluft oder anderen sauerstoffhaltigen Gasen verbrannt wird. Als Brennstoff kann Erdgas verwendet werden. Flüssige Kohlenwasserstoffe, wie leichtes und schweres Heizöl, können ebenfalls eingesetzt werden.

In einer bevorzugten Ausführungsform der Erfindung kann man als Brennstoff auch Rußrohstoff (Rußöl) einsetzen.

Die Verbrennung des Brennstoffes erfolgt gewöhnlich unter Sauerstoffüberschuß. Der Luftüberschuß fördert dabei den vollständigen Umsatz des Brennstoffes und dient zur Steuerung der Rußqualität. Der Brennstoff wird gewöhnlich mittels einer oder mehrerer Brennerlanzen in die Brennkammer eingeführt.

In der zweiten Zone des Rußreaktors, der sogenannten Reaktionszone oder Pyrolysezone, findet die Rußbildung statt. Dazu wird der Rußrohstoff, im allgemeinen ein sogenanntes Rußöl, in den Strom des heißen Prozeßgases injiziert und eingemischt. Bezogen auf die in der Verbrennungszone nicht vollständig umgesetzte Sauerstoffmenge ist die in der Reaktionszone eingebrachte Kohlenwasserstoffmenge im Überschuß. Daher setzt hier normalerweise.die Rußbildung ein.

Falls das Rußöl auch als Brennstoff eingesetzt wird, kann die Rußbildung schon in der Verbrennungszone eintreten. In der Reaktionszone kann dann auf den in dem Verbrennungsraum entstandenen Rußteilchen weiterer Ruß aufgebracht werden.

Rußöl kann auf verschiedene Art in den Reaktor injiziert werden. Geeignet ist zum Beispiel eine axiale Ölinjektionslanze oder eine, beziehungsweise mehrere, radiale Öllanzen, die in einer Ebene senkrecht zur Strömungsrichtung auf dem Umfang des Reaktors angeordnet sind. Ein Reaktor kann längs der Strömungsrichtung mehrere Ebenen mit radialen Öllanzen aufweisen. Am Kopf der Öllanzen befinden sich Sprüh- oder Spritzdüsen, mit denen das Rußöl in den Strom des Prozeßgases eingemischt wird.

Bei gleichzeitiger Verwendung von Rußöl und gasförmigen Kohlenwasserstoffen, wie zum Beispiel Methan, als Rußrohstoff, können die gasförmigen Kohlenwasserstoffe getrennt vom Rußöl über einen eigenen Satz von Gaslanzen in den Strom des heißen Abgases injiziert werden.

In der dritten Zone des Rußreaktors, der sogenannten Abbruchzone (Quenchzone), wird die Rußbildung durch schnelles Abkühlen des rußhaltigen Prozeßgases abgebrochen. Dadurch werden unerwünschte Nachreaktionen vermieden. Den Reaktionsabbruch erreicht man gewöhnlich durch Einsprühen von Wasser mittels geeigneter Sprühdüsen. Meist weist der Rußreaktor mehrere Stellen längs des Reaktors für das Einsprühen von Wasser, beziehungsweise "Quenchen", auf, so daß man die Verweilzeit des Rußes in der Reaktionszone variieren kann. In einem nachgeschalteten Wärmetauscher wird die Restwärme des Prozeßgases genutzt, um die Verbrennungsluft und das Rußöl vorzuwärmen.

Während die bekannten Furnacerußverfahren eine möglichst vollständige Verbrennung des Brennstoffes in der Brennkammer, beziehungsweise in der Verbrennungszone, zum Ziel haben, beruht das erfindungsgemäße Verfahren zur Rußherstellung darauf, daß durch unvollständige Verbrennung des Brennstoffes in der Verbrennungszone Kohlenstoffkeime gebildet werden, die mit dem Strom des heißen Abgases in die Reaktionszone transportiert werden und dort eine keiminduzierte Rußbildung mit dem zugeführten Rußrohstoff in Gang setzen. Die angestrebte unvollständige Verbrennung des Brennstoffes bedeutet jedoch nicht, daß der Brennstoff in einem Unterschuß von Sauerstoff verbrannt wird. Vielmehr geht das erfindungsgemäße Verfahren ebenfalls von einem Überschuß an Luft oder sauerstoffhaltigen Gasen in der Brennkammer aus. Dabei können wie bei konventionellen Rußen K-Faktoren zwischen 0,3 und 1,2 angewendet werden. Bevorzugt wird jedoch mit K-Faktoren zwischen 0,6 und 0,7 gearbeitet.

Um trotz des Luftüberschusses Rußkeime zu erzeugen, können verschiedene Wege beschritten werden. Bei einer bevorzugten Variante des erfindungsgemäßen Verfahrens geht man von flüssigen Kohlenwasserstoffen als Brennstoff aus, die anstelle von Erdgas in der Brennkammer des Reaktors mit einem Überschuß an Luft oder sauerstoffhaltigen Gasen verbrannt werden. Flüssige Kohlenwasserstoffe verbrennen langsamer als gasförmige, da sie zuerst in die Gasform überführt, d.h. verdampft werden müssen. Trotz Sauerstoffüberschuß können daher mit flüssigen Kohlenwasserstoffen neben der Verbrennung auch Kohlenstoffkeime produziert werden, die - falls genügend Zeit vorhanden ist und die Temperatur genügend hoch ist - auch wieder verbrennen, oder aber bei rascher Abkühlung zu größeren Rußteilchen wachsen können. Die keiminduzierte Rußbildung beruht darauf, daß man die bei der Verbrennung von flüssigen Kohlenwasserstoffen unter Sauerstoffüberschuß gebildeten Keime unmittelbar mit dem Rußöl in Kontakt bringt und damit das Keimwachstum einleitet.

Eine andere Variante des erfindungsgemäßen Verfahrens verwendet Erdgas als Brennstoff. Eine Keimbildung wird dadurch erreicht, daß die Ausströmungsgeschwindigkeit des Gases aus der beziehungsweise den Brennerlanzen so niedrig gewählt wird, daß man bewußt eine schlechte Einmischung des Erdgases in den.heißen Strom der Verbrennungsluft erreicht. Die Bildung von Rußkeimen bei schlecht durchmischten Flammen ist bekannt, wobei man wegen des Aufleuchtens der gebildeten Teilchen auch von leuchtenden Flammen spricht. Bei dieser Verfahrensweise ist es ebenfalls wie bei der Verbrennung von flüssigen Kohlenwasserstoffen wichtig, daß die gebildeten Keime unmittelbar nach der Entstehung mit dem Rußöl in Berührung gebracht werden. Sorgt man durch eine größere Brennkammer beziehungsweise Verbrennungszone dafür, daß sich die Keime mit dem im Überschuß vorhandenen Sauerstoff in der Verbrennungszone umsetzen können, läßt man also eine vollständige Verbrennung in der Verbrennungszone des Rußreaktors zu, so findet keine keiminduzierte Rußbildung statt.

Die erfindungsgemäßen Ruße können hergestellt werden, indem Silikonöle in die Rußrohstoffe eingemischt oder separat in die Brennkammer oder die Pyrolysezone des Rußreaktors eingesprüht werden. Das Einmischen der Silikonöle in das Rußöl kann in Form einer Lösung erfolgen, wenn die Verbindungen im Rußöl löslich sind oder in Form einer Emulsion. Durch diese Maßnahmen wird ein Einbau der Siliziumatome in die Rußprimärteilchen erreicht. Zum separaten Einsprühen der Silikonöle in die Pyrolysezone des Rußreaktors können eine oder mehrere der normalerweise für das Einsprühen des Rußrohstoffes verwendeten Öllanzen benutzt werden.

Zur Herstellung der Inversionsruße wird das Furnaceruß-Verfahren modifiziert. Während die konventionellen Purnaceruß-Verfahren eine möglichst vollständige Verbrennung des Brennstoffes in der Brennkammer, beziehungsweise in der Verbrennungszone, zum Ziel haben, beruht das Verfahren gemäß der DE 195 21 565 zur Herstellung von Inversionsrußen darauf, daß durch unvollständige Verbrennung des Brennstoffes in der Verbrennungszone Kohlenstoffkeime gebildet werden, die mit dem Strom des heißen Abgases in die Reaktionszone transportiert werden und dort eine keiminduzierte Rußbildung mit dem zugeführten Rußrohstoff in Gang setzen. Die angestrebte unvollständige Verbrennung des Brennstoffes bedeutet jedoch nicht, daß der Brennstoff in einem Unterschuß von Sauerstoff verbrannt wird. Vielmehr geht das erfindungsgemäße Verfahren ebenfalls von einem Überschuß an Luft oder sauerstoffhaltigen Gasen in der Brennkammer aus. Dabei können wie bei konventionellen Rußen K-Faktoren zwischen 0,3 und 0,9 angewendet werden.

Um trotz des Luftüberschusses Rußkeime zu erzeugen, können gemäß der DE 195 21 565 verschiedene Wege beschritten werden. Bei einer bevorzugten Variante des Verfahrens geht man von flüssigen Kohlenwasserstoffen als Brennstoff aus, die anstelle von Erdgas in der Brennkammer des Reaktors mit einem Überschuß an Luft oder sauerstoffhaltigen Gasen verbrannt werden. Flüssige Kohlenwasserstoffe verbrennen langsamer als gasförmige, da sie zuerst in die Gasform überführt, das heißt verdampft werden müssen. Trotz Sauerstoffüberschuß können daher mit flüssigen Kohlenwasserstoffen neben der Verbrennung auch Kohlenstoffkeime produziert werden, die - falls genügend Zeit vorhanden ist und die Temperatur genügend hoch ist - auch wieder verbrennen, oder aber bei rascher Abkühlung zu größeren Rußteilchen wachsen können. Die keiminduzierte Rußbildung beruht darauf, daß man die bei der Verbrennung von flüssigen Kohlenwasserstoffen unter Sauerstoffüberschuß gebildeten Keime unmittelbar mit dem Rußöl in Kontakt bringt und damit das Keimwachstum einleitet.

Eine andere Variante des Verfahrens gemäß der DE 195 21 565 verwendet Erdgas als Brennstoff. Eine Keimbildung wird.dadurch erreicht, daß die Ausströmungsgeschwindigkeit des Gases aus der beziehungsweise den Brennerlanzen so niedrig gewählt wird, daß man bewußt eine schlechte Einmischung des Erdgases in den heißen Strom der Verbrennungsluft erreicht. Die Bildung von Rußkeimen bei schlecht durchmischten Flammen ist bekannt, wobei man wegen des Aufleuchtens der gebildeten Teilchen auch von leuchtenden Flammen spricht. Bei dieser Verfahrensweise ist es ebenfalls wie bei der Verbrennung von flüssigen Kohlenwasserstoffen wichtig, daß die gebildeten Keime unmittelbar nach der Entstehung mit dem Rußöl in Berührung gebracht werden. Sorgt man durch eine größere Brennkammer beziehungsweise Verbrennungszone dafür, daß sich die Keime mit dem im Überschuß vorhandenen Sauerstoff in der Verbrennungszone umsetzen können, läßt man also eine vollständige Verbrennung in der Verbrennungszone des Rußreaktors zu, so findet keine keiminduzierte Rußbildung statt.

Beide beschriebenen Varianten können auch miteinander kombiniert werden. In diesem Fall werden die flüssigen Kohlenwasserstoffe und Erdgas oder andere gasförmige Brennstoffe in geeigneten Verhältnissen gleichzeitig der Verbrennungszone zugeführt. Als flüssige Kohlenwasserstoffe werden bevorzugt Öle, zum Beispiel das Rußöl selber, eingesetzt.

Das Verfahren gemäß der DE 195 21 565 besteht also darin, daß man in der Verbrennungszone, in welcher bezogen auf die eingesetzten Kohlenwasserstoffe der Sauerstoff im Überschuß vorhanden ist, flüssige und/oder gasförmige Kohlenwasserstoffe als Brennstoffe einsetzt und dafür sorgt, daß sich zum Beispiel durch eine ungenügende Verweilzeit der flüssigen Kohlenwasserstoffe oder durch eine ungenügende Durchmischung der gasförmigen Kohlenwasserstoffe mit der Verbrennungsluft, Rußkeime bilden, die man unmittelbar nach ihrer Entstehung mit dem Rußrohstoff, der bezogen auf die Sauerstoffmenge, im Überschuß eingesetzt wird, in der Reaktionszone in Kontakt bringt, das entstehende Ruß-Reaktionsgasgemisch dann durch Eindüsen von Wasser in der Abbruchzone abkühlt und den so entstandenen Ruß in der üblichen Weise weiterverarbeitet.

Der Brennstoff trägt gemäß der DE 195 21 565 entscheidend zur Rußbildung bei und wird im folgenden daher als primärer Rußrohstoff bezeichnet. Der in die Reaktionszone einzumischende Rußrohstoff wird dementsprechend als sekundärer Rußrohstoff bezeichnet und trägt den mengenmäßig größten Teil zum gebildeten Ruß bei.

Die Inversionsruße gemäß der DE 195 21 565 verleihen Rußmischungen gegenüber entsprechenden konventionellen Rußen einen verringerten Rollwiderstand und eine vergleichbare Naßhaftung. Weiterhin wurde durch AFM-Untersuchungen (AFM = Atomic Force Microscopy) gefunden, daß die Inversionsruße eine signifikant rauhere Oberfläche als korrespondierende Standard ASTM-Ruße aufweisen und dadurch eine verbesserte Anbindung des Kautschukpolymers an die Rußpartikel ermöglichen (siehe W. Gronski et al. "NMR Relaxation - A Method Relevant for Technical Properties of Carbon Black Filled Rubbers; International rubber conference 1997, Nürnberg, Seite 107). Die verbesserte Anbindung des Kautschukpolymers führt zu dem verringerten Rollwiderstand.

Untersuchungen zum Abrieb von Gummischungen unter Verwendung von Inversionsrußen haben gezeigt, daß diese Ruße den Gummimischungen bei geringen Belastungen einen verbesserten Abriebwiderstand verleihen. Bei hohen Belastungen, wie sie bei Reifen für Lastkraftwagen auftreten, weisen diese Gummimischungen einen erhöhten Abrieb auf.

In einer Ausführungsform der Erfindung kann man verbesserte Inversionsruße, welche sich insbesondere durch einen verminderten Abrieb bei hohen Belastungen auszeichnen, verwenden.

So ist es möglich einen Furnaceruß mit CTAB-Werten zwischen 20 und 190 m$^2$/g und 24M4-DBP Absorption zwischen 40 und 140 ml/100g mit einem Verhältnis $\tan\delta_0/\tan\delta_{60}$, welches bei Einarbeitung in eine SSBR/BR-Gummimischung der Beziehung

$$\tan\delta_0/\tan\delta_{60} > 2{,}76 - 6{,}7 \times 10^{-3} \times CTAB,$$

genügt, wobei der Wert von $\tan\delta_{60}$ stets niedriger ist als der Wert für ASTM-Ruße mit gleicher CTAB-Oberfläche und 24M4-DBP Absorption zu verwenden. Dieser Ruß ist dadurch gekennzeichnet, daß die Verteilungskurve der Partikeldurchmesser der Rußaggregate eine absolute Schiefe von weniger als 400000 nm$^3$ aufweist.

Diese erfindungsgemäß einsetzbaren Ruße erfüllen bezüglich des Verhältnisses $\tan\delta_0/\tan\delta_{60}$ dieselben Anforderungen wie die bekannten Inversionsruße und verleihen daher bei Einarbeitung in Gummimischungen den daraus hergestellten Reifen einen verminderten Rollwiderstand. Sie zeichnen sich jedoch gegenüber den bekannten Inversionsrußen durch eine engere Aggregatgrößenverteilung aus. Zur Beschreibung der Aggregatgrößenverteilung wird hierbei das aus der Statistik bekannte Maß der "absoluten Schiefe" verwendet (siehe: Lothar Sachs: "Statistische Auswertungsmethoden", Springer-Verlag Berlin, 3. Auflage, Seiten 81 bis 83). Es stellt eine dem vorliegenden Problem angemessenere Beschreibung der Form der Aggregatgrößenverteilungskurve dar als eine Beschränkung der Aggregatgrößen durch Maximal- und Minimalwerte.

Unter der "absoluten Schiefe" versteht man die Abweichung von einer symmetrischen Aggregatgrößenverteilung. Eine schiefe Verteilungskurve liegt vor, wenn einer der beiden absteigenden Äste der Verteilungskurve verlängert ist. Ist der linke Kurventeil verlängert, spricht man von negativer Schiefe, das heißt die Bestimmung der absoluten Schiefe liefert Werte unter Null. Ist der rechte Kurvenabschnitt verlängert, so liegt eine positive Schiefe mit Werten größer als Null vor. Die bekannte ASTM-Ruße sowie die Inversionsruße und die erfindungsgemäßen Ruße weisen eine positive Schiefe unterschiedlicher Ausprägung auf.

Überraschender Weise wurde gefunden, daß die im Stand der Technik akzeptierte Auffassung, eine verbreiterte Aggregatgrößenverteilung des Verstärkerrußes verleihe den Kautschukmischungen einen verminderten Rollwiderstand, keine Allgemeingültigkeit beanspruchen kann. Die bei Inversionsrußen zu beobachtende Verbesserung des Rollwiderstandes von Kautschukmischungen ist offensichtlich nicht von der Breite der Aggregatgrößenverteilung abhängig, sondern wird im wesentlichen durch die größere Oberflächenrauhigkeit der Inversionsruße und die damit verknüpfte bessere Anbindung des Kautschukpolymers an die Rußoberfläche verursacht.

Gegenüber den bekannten Inversionsrußen mit ihrer relativ breiten Aggregatgrößenverteilung kann nun deren Abriebwiderstand erfindungsgemäß dadurch verbessert werden, daß die Breite der Aggregatverteilung eingeschränkt wird. Insbesondere muß der Anteil von Rußaggregaten mit großen Teilchendurchmessern verringert werden, wenn die Ruße den Kautschukmischungen neben einem verminderten Rollwiderstand gleichzeitig einen verbesserten Abriebwiderstand verleihen sollen. Dies ist dann der Fall, wenn die absolute Schiefe der Aggregatgrößenverteilung geringer als 400000, bevorzugt geringer als 200000 nm$^3$, ist. Die absolute Schiefe der aus der DE 195 21 565 bekannten Inversionsruße liegt oberhalb von 400000 nm$^3$, während die absolute Schiefe von standard ASTM-Rußen unterhalb von 100000 nm$^3$ liegt.

Die absolute Schiefe der Aggregatgrößenverteilung eines Rußes kann mit Hilfe einer Scheibenzentrifuge und entsprechende Auswertung der Meßwerte ermittelt werden. Die zu untersuchende Rußprobe wird hierbei in einer wäßrigen Lösung dispergiert und in einer Scheibenzentrifuge nach ihrer Teilchengröße aufgetrennt: je größer die Partikel sind, je größer also ihre Masse ist, um so schneller bewegen sich die Rußpartikel infolge der Zentrifugalkraft in der wäßrigen Lösung nach außen. Sie durchwandern dabei eine Lichtschranke, mit deren Hilfe die Extinktion als Funktion der Zeit aufgenommen wird. Aus diesen Daten wird die Aggregatgrößenverteilung, das heißt die Häufigkeit als Funktion des Teilchendurchmessers errechnet. Hieraus kann die absolute Schiefe AS wie folgt ermittelt werden:

$$ AS = \frac{\sum\limits_{i=1}^{k} H_i \left( x_i - \overline{x} \right)^3}{\sum\limits_{i=1}^{k} H_i} $$

Hierin bezeichnet $H_i$ die Häufigkeit, mit der der Teilchendurchmesser $x_i$ auftritt. $\overline{x}$ ist dabei der Teilchendurchmesser der Teilchen, deren Masse der mittleren Teilchenmasse der Rußaggregate entspricht. $\overline{x}$ wird ebenfalls mit Hilfe der Aggregatgrößenverteilung berechnet. Die Summationen in der obigen Formel müssen im Bereich von 1 nm bis 3000 nm in äquidistanten Abständen von jeweils einem Nanometer vorgenommen werden. Eventuell fehlende Meßwerte werden durch lineare Interpolation berechnet.

Die erfindungsgemäßen Inversionsruße lassen sich nach dem in der DE 195 21 565 beschriebenen generischen Verfahren herstellen. Gemäß diesem Verfahren wird der Inversionsruß in einem Rußreaktor hergestellt, welcher längs der Reaktorachse eine Verbrennungszone, eine Reaktionszone und eine Abbruchzone enthält. In der Verbrennungszone wird durch Verbrennen eines primären Rußrohstoffes in Sauerstoff enthaltenden Gasen ein Strom heißer Abgase erzeugt. Dieser heiße Gasstrom wird von der Verbrennungszone durch die Reaktionszone in die Abbruchzone geleitet. In der Reaktionszone wird ein sekundärer Rußrohstoffe in das heiße Abgas eingemischt. Die Rußbildung wird in der Abbruchzone durch Einsprühen von Wasser abgestoppt. Hierbei wird als primärer Rußrohstoff Öl, ein Öl/Erdgas-Gemisch oder Erdgas allein verwendet. Die Verbrennung des primären Rußrohstoffes in der Verbrennungszone wird so geführt, daß sich Rußkeime bilden, mit denen der sekundäre Rußrohstoff unmittelbar in Kontakt gebracht wird.

Um die erfindungsgemäßen Ruße zu erhalten muß dieses Verfahren nun so geführt werden, daß der sich bildende Ruß eine Aggregatgrößenverteilung mit einer absoluten Schiefe von weniger als 400000 nm$^3$ aufweist. Dies kann zum Beispiel durch Erhöhen der Zufuhr von Verbrennungsluft, primärem und sekundärem Rußrohstoff erreicht werden.

Das beschriebene Verfahren ist nicht auf eine bestimmte Reaktorgeometrie beschränkt. Es kann vielmehr auf verschiedene Reaktortypen und Reaktorgrößen angepaßt werden. Die gewünschte Keimbildung in der Verbrennungszone kann der Fachmann durch verschiedene Maßnahmen einstellen. Mögliche Einflußgrößen zur Optimierung der Keimbildung bei Verwendung von Öl als Brennstoff sind das Verbrennungsluft/Öl-Massenverhältnis, die Art des verwendeten Zerstäubers für den Brennstoff und die Größe der zerstäubten Öltröpfchen. Als Brennstoff-Zerstäuber können sowohl reine Druckzerstäuber (Einstoffzerstäuber) als auch Zweistoffzerstäuber mit innerer oder äußerer Mischung eingesetzt werden, wobei als Zerstäubungsmedium Preßluft, Wasserdampf, Wasserstoff, ein Inertgas oder auch ein Kohlenwasserstoffgas verwendet werden kann. Die vorstehend beschriebene Kombination eines flüssigen mit einem gasförmigen Brennstoff kann also zum Beispiel durch Verwendung des gasförmigen Brennstoffs als Zerstäubungsmedium für den flüssigen Brennstoff realisiert werden.

Die Erfindung wird nun anhand der Zeichnung näher erläutert. Es zeigt

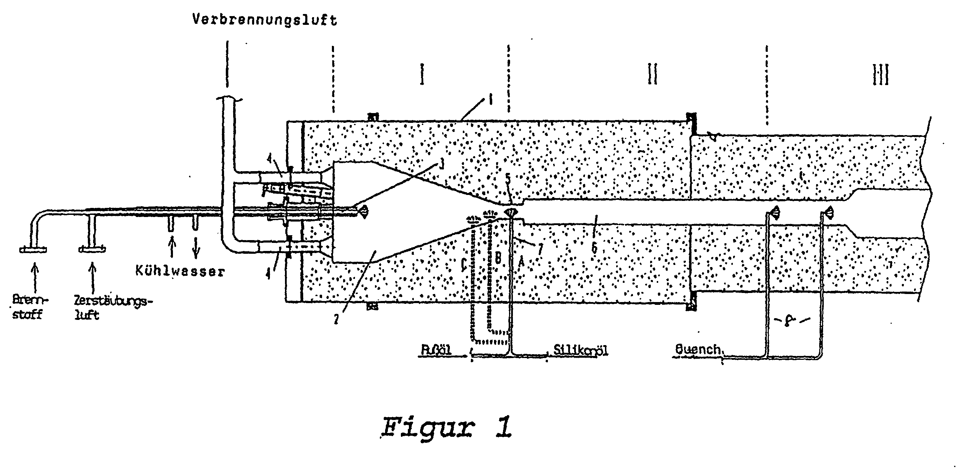

Figur 1:    einen Längsschnitt durch.den für die Herstellung der erfindungsgemäßen Ruße benutzten Reaktor.

Beispiele

Es wird ein erfindungsgemäßer Ruß in dem in Figur 1 dargestellten Rußreaktor 1 hergestellt. Dieser Rußreaktor 1 besitzt eine Brennkammer 2, in der das heiße Abgas für die Pyrolyse des Rußöles durch Verbrennen von Öl unter Zufuhr von einem Überschuß an Luftsauerstoff erzeugt wird. Der Brennstoff wird über die axiale Brennerlanze 3 in die Brennkammer eingeführt. Die Brennerlanze kann zur Optimierung der keiminduzierten Rußbildung in axialer Richtung verschoben werden.

Die Zufuhr der Verbrennungsluft erfolgt über die Öffnung 4 in der Stirnwand der Brennkammer. Die Brennkammer läuft konisch auf die Engstelle 5 zu. Nach Durchqueren der Engstelle expandiert das Reaktionsgasgemisch in die Reaktionskammer 6.

Mit A, B und C sind verschiedene Positionen für die Injektion des Rußöles in das heiße Prozeßgas mittels der Öllanzen 7 bezeichnet. Die Öllanzen weisen an ihrem Kopf geeignete Sprühdüsen auf. An jeder Injektionsposition sind vier Injektoren über den Umfang des Reaktors verteilt.

Die für das erfindungsgemäße Verfahren wichtige Verbrennungszone, Reaktionszone und Abbruchzone sind in Figur 1 durch die römischen Ziffern I bis III gekennzeichnet. Sie können nicht scharf voneinander getrennt werden. Ihre axiale Ausdehnung hängt von der jeweiligen Positionierung der Brennerlanze, der Öllanzen und der Quenchwasser-Lanze 8 ab.

Die Abmessungen des verwendeten Reaktors sind der folgenden Aufstellung zu entnehmen:

| | | |
|---|---|---|
| Größter Durchmesser der Brennkammer | | 530 mm |
| Länge der Brennkammer bis Engstelle | | 1525 mm |
| Länge des konischen Teils der Brennkammer | | 1160 mm |
| Durchmesser der Engstelle | | 140 mm |
| Länge der Engstelle | | 230 mm |
| Durchmesser der Reaktionskammer | | 240 mm |
| Position der Öllanzen [1] | A | + 110 mm |
| | B | - 150 mm |
| | C | - 410 mm |
| Position der Quenchwasserlanze(n) [1] | 1 | 1355 mm |
| | 2 | 2900 mm |

[1] gemessen vom Eintritt in die Engstelle (+: nach Eintritt -: vor Eintritt)

Alle in dem beschriebenen Reaktor hergestellten Ruße werden vor der Charakterisierung und Einarbeitung in die Gummimischungen nach bekannten Verfahren geperlt.

Zur Herstellung der erfindungsgemäßen Ruße werden als Brennstoff Erdgas und ein Rußöl mit einem Kohlenstoffgehalt von 91,4 Gew.-% und einem Wasserstoffgehalt von 6,1 Gew.-% eingesetzt.

Die Reaktörparameter für die Herstellung der erfindungsgemäßen Ruße sind in Tabelle 1 aufgeführt. Es werden Ruße $R_1$, $R_2$ und $R_3$ sowie der Vergleichsruß A4496 hergestellt. Zur Herstellung wird Silikonöl dem Rußöl beigemischt.

Für die erfindungsgemäßen Ruße $R_1$ bis $R_3$ wird die Dosierung so gewählt, daß der fertige Ruß 5,6 Gew.-% Silizium enthält.

Tabelle 1: Reaktorparameter für die Herstellung der Ruße

| Parameter | Einheit | A 4496 | Ruß | |
| --- | --- | --- | --- | --- |
| | | | R1, R3 | R2 |
| Verbrennungsluft | Nm³/h | 3000 | 2700 | 2700 |
| Temperatur der Verbrennungsluft | °C | 560 | 450 | 450 |
| Brennstoff (Erdgas) | Nm³/h | 237 | - | - |
| Fuelöl | Kg/h | - | 200 | 200 |
| Rußöl | Kg/h | 640 | 360 | 365 |
| Rußöl-Temperatur | °C | 131 | 127 | 127 |
| Silikonöl | 1/h | - | 36 | 36 |
| Position der Rußölinjektoren | | 4 x A | 4 x A | 4 x A |
| Additiv Konzentration | g/l | 1 | 1 | 1 |
| Menge | 1/h | 2 | 14 | 11,5 |
| Quenchposition[1] | mm | 1355 | 1355 | 1355 |

[1] Gemessen vom Eintritt in die Engstelle

Die Ruße R1, R2 und A 4496 sind naßgeperlt.

Der Ruß R3 ist trocken geperlt.

Die rußanalytischen Kenndaten der hergestellten Ruße werden nach folgenden Normen ermittelt und sind in Tabelle 2 aufgeführt:

| | |
|---|---|
| STSA-Oberfläche | ASTM D-5816 |
| DBP-Absorption | ASTM D-2414 |
| 24M4-DBP-Abbsorption | ASTM D-3493 |

Tabelle 2:

| rußanalytische Kenndaten | | | | | |
|---|---|---|---|---|---|
| Ruß | DBP [ml/100g] | 24M4-DBP [ml/100g] | Si [Gew.-%] | STSA [m²/g] | CTAB [m²/g] |
| N220 | 114 | 98 | 0 | 107 | 110 |
| A4496 | 112 | 96 | 0 | 108 | 110 |
| R1 | 103 | 94 | 5,6 | 110 | 121 |
| R2 | 102 | 96 | 5,6 | 112 | 122 |
| R3 | 118 | 91 | 5,6 | 103 | 113 |

Anwendungsbeispiel

Die Ruße R1, R2 und R3 sowie die Vergleichsruße N220 und A4496 werden zur Herstellung von Gummimischungen verwendet. An den Gummimischungen werden unter anderem die viskoelastischen Eigenschaften bestimmt.

Die viskoelastischen Eigenschaften der mit diesen Rußen verstärkten Gummimischungen werden nach DIN 53513 bestimmt. Es werden insbesondere die Verlustfaktoren tanδ bei 0°C und bei 60°C ermittelt. Die für die Gummimischungen verwendete Testrezeptur ist in Tabelle 3 aufgeführt.

Tabelle 3:

| SSBR/BR-Testrezeptur | |
|---|---|
| Mischungs-Komponente | Gehalt [phr] |
| SSBR | 96,0 |
| BR | 30,0 |
| Ruß | 80,0 |
| ZnO RS | 3,0 |
| Stearinsäure | 2,0 |
| aromatisches Öl | 10,0 |
| 6 PPD | 1,5 |
| Wachs | 1,0 |
| CBS | 1,5 |
| DPG | 2,0 |
| TMTD | 0,2 |
| Schwefel | 1,5 |
| Silankopplungsreagenz Si69® | wahlweise |

Bei der SSBR Kautschukkomponente handelt es sich um ein in Lösung polymerisiertes SBR-Copolymer mit einem Styrolgehalt von 25 Gew.-% und einem Butadiengehalt von 75 Gew.-%. Der Vinylgehalt des Butadiens beträgt 67 %. Das Copolymer enthält 37,5 phr Öl und wird unter dem Handelsnamen Buna VSL 5025-1 von Bayer AG vertrieben. Seine Mooney-Viskosität (ML 1+4/100°C) beträgt etwa 50.

Bei der BR Kautschukkomponente handelt es sich um ein cis 1,4-Polybutadien (Neodymtyp) mit einem cis 1,4-Gehalt von mindestens 96 Gew.-%, einem trans 1,4-Gehalt von 2 Gew.-%, einem 1,2-Gehalt von 1 Gew.-% und einer Mooney-Viskosität von 44 ± 5. Diese Komponente wird unter dem Handelsnamen Buna CB 24 von der Bayer AG vertrieben.

Als aromatisches Öl wird Naftolen® ZD von Chemetall verwendet. Bei dem PPD-Anteil der Testrezeptur handelte es sich um Vulkanox® 4020 und bei dem CBS-Anteil um Vulkacit® CZ,bei DPG um Vulkacit® D und bei TMTD um Vulkacit® Thiuram, alle von der Bayer AG. Als Wachs wird Protector G35 von der HB-Fuller GmbH eingesetzt.

Die Einarbeitung der Ruße in die Gummimischung wird in drei Stufen entsprechend der folgenden tabellarischen Aufstellung vorgenommen:

| Stufe 1 | |
|---|---|
| **Einstellungen** | |
| Mischaggregat<br>Friktion<br>Drehzahl<br>Stempeldruck<br>Leervolumen<br>Füllgrad<br>Durchflußtemp. | Werner & Pfleiderer GK 1,5 N<br>1:1,11<br>70 min$^{-1}$<br>5,5 bar<br>1,6 1<br>0,73<br>80°C |
| **Mischvorgang** | |
| 0 bis 1 min<br>1 bis 3 min<br>3 bis 4 min<br>4 min<br>4 bis 6 min<br>Batch-Temp.<br>Lagerung | Buna VSL 5025-1 + Buna CB 24<br>1/2 Ruß + ZnO RS + Stearinsäure + Naftolen® ZD + ggf. Si69®<br>1/2 Ruß, Vulkanox® 4020 + Protector G35<br>säubern<br>mischen und ausfahren<br>150-160°C<br>24 h bei Raumtemperatur |

| Stufe 2 | |
|---|---|
| **Einstellungen** | |
| Mischaggregat<br>Füllgrad<br>Durchflußtemp. | wie in Stufe 1 bis auf<br>0,71<br>90 °C |
| **Mischvorgang** | |
| 0 bis 2 min<br>2 bis 5 min<br>5 min<br>Batch-Temp.<br>Lagerung | Batch von Stufe 1 aufbrechen<br>Batchtemperatur 160 °C halten durch Drehzahlvariation<br>ausfahren<br>160°C<br>4h/RT |

| Stufe 3 | |
|---|---|
| **Einstellungen** | |
| Mischaggregat<br>Füllgrad<br>Durchflußtemp.<br>Drehzahl | wie in Stufe 1 bis auf<br>0,69<br>50 °C<br>40 |
| **Mischvorgang** | |
| 0 bis 2 min<br>2 min | Batch von Stufe 2 + Vulkacit® CZ + Vulkacit® D und Vulkacit® Thiuram + Schwefel<br>ausfahren und auf Labormischwalzwerk (Durchmesser 200 mm, Länge 450 mm, Durchflußtemperatur 50°C) Fell bilden.<br>Zum Homogenisieren dann:<br>3 x links und 3 x rechts einscheiden und umklappen sowie<br>8 x bei engem Walzenspalt (1 mm) und 3 x bei breitem Walzenspalt (3,5 mm) stürzen und anschließend Fell ausziehen. |

Die anschließende Bestimmung der gummitechnischen Eigenschaften, das heißt Shore-Härte, Spannungswerte M100 und M300, Rebound bei 0 und 60°C sowie Verlustfaktor tanδ bei 0 und 60°C und der dynamische Dehnmodul |E*| bei 0°C, erfolgt gemäß den aufgeführten Normen. Die Meßbedingungen für die viskoelastischen Eigenschaften sind in Tabelle 4 zusammengestellt.

Tabelle 4:

| Bestimmung der viskoelastischen Eigenschaften gemäß DIN 53513 | |
|---|---|
| **Vulkanisation der Probenkörper** | |
| Vulkanisations-Temperatur | 165°C |
| Vulkanisations-Dauer | $T_{95}$ + 5 min ($T_{95}$:DIN 53529) |
| **Probenkörperform** | |
| Form | zylindrisch |
| Länge | 10 mm |
| Durchmesser | 10 mm |
| Anzahl | 5 |
| **Prüfmaschine** | |
| Typ/Hersteller | 830/MTS |
| Art der Beanspruchung | Dehnung |
| Mittlere Kraftamplitude | 50 N |
| Dynamische Kraftamplitude | ± 25 N |
| Prüffrequenz | 16 Hz |
| **Prüfablauf** | 5 min temperieren dann dynamische Belastung bei 16 Hz für die Dauer von 2 min mit nachfolgender Messung |

Verwendet wird jeweils der Medianwert der Messungen an den fünf Probekörpern.

Die Ergebnisse der gummitechnischen Untersuchungen sind in Tabellen 5 aufgelistet. Gegenüber dem Vergleichsruß verleihen die erfindungsgemäßen Ruße den Gummimischungen einen verminderten Verlustfaktor bei 60°C und einen erhöhten Verlustfaktor bei 0°C ohne Kopplungsagenz. Durch Zugabe von Si69® kann der Verlustfaktor bei 60 °C weiter abgesenkt werden. Von Reifen, die aus derartigen Gummimischungen hergestellt werden, ist folglich ein verbessertes Naßrutschverhalten bei gleichzeitig vermindertem Rollwiderstand zu erwarten.

Der trockengeperlte Ruß R3 führt zu einer weiteren tanδ 60°C-Absenkung gegenüber dem naßgeperlten Ruß R1.

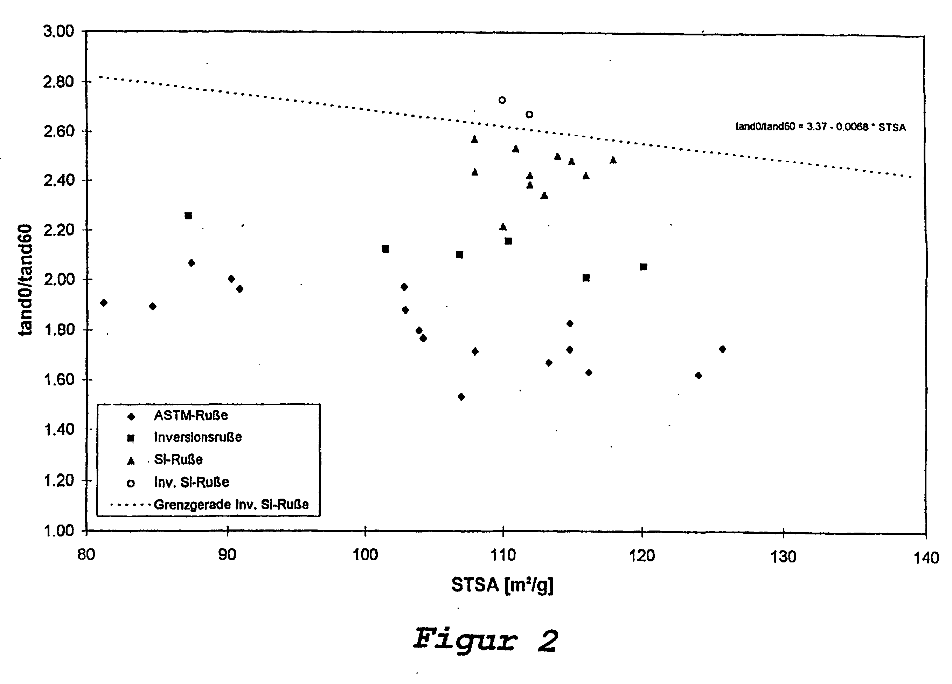

Das vorteilhafte Verhalten der erfindungsgemäßen Ruße zeigt die graphische Darstellung gemäß der Figur 2.

Gemäß Figur 2 ist für diese Ruße ihr Verhältnis $tanδ_0/tanδ_{60}$ über der STSA-Oberfläche aufgetragen. Die beiden erfindungsgemäßen Ruße zeigen bei gleicher STSA-Oberfläche ein deutlich größeres tanδ-Verhältnis, also ein steileres Temperaturprofil des Verlustfaktors.

Der Bereich der erfindungsgemäßen Ruße läßt sich klar von den konventionellen Rußen abgrenzen. Er liegt oberhalb der in Figur 2 dargestellten Grenzgeraden, welche durch die Berechnung $tanδ_0/tanδ_{60}$ = 3,37 -0,0068·STSA gegeben ist.

**Tabelle 5:**  Ergebnisse der gummitechnischen Untersuchungen

| Füll-stoff | Si69 [phr] | Shore A DIN 53505 | M100 DIN 53504 [MPa] | M300 DIN 53504 [MPa] | Rebound 0°C ASTM D 5308 [%] | Rebound 60°C ASTM D 5308 [%] | $\tan\delta_0$ DIN 53513 | $\tan\delta_{60}$ DIN 53513 | E* 0°C DIN 53513 [MPa] | $\tan\delta_0/\tan\delta_{60}$ |
|---|---|---|---|---|---|---|---|---|---|---|
| N220   | 0   | 68 | 2,1 | 10,1 | 14,7 | 35,4 | 0,427 | 0,279 | 55,9 | 1,53 |
| A 4496 | 0   | 68 | 2,0 | 10,4 | 14,6 | 36,4 | 0,447 | 0,261 | 46,8 | 1,71 |
| R1     | 0   | 62 | 1,9 | ϛ-9,2 | 14,1 | 48,6 | 0,480 | 0,176 | 22,2 | 2,73 |
| R2     | 0   | 64 | 1,9 | 9,2  | 14,7 | 47,3 | 0,478 | 0,179 | 22,7 | 2,67 |
| R3     | 0   | 61 | 1,8 | 9,7  | 14,0 | 50,7 | 0,467 | 0,166 | 19,4 | 2,81 |
| N220   | 2,4 | 69 | 2,6 | 12,4 | 15,0 | 41,2 | 0,482 | 0,239 | 39,4 | 2,02 |
| A4496  | 2,4 | 67 | 2,5 | 12,6 | 14,7 | 42,2 | 0,479 | 0,229 | 34,9 | 2,09 |
| R1     | 2,4 | 65 | 2,5 | 13,1 | 14,3 | 55,1 | 0,431 | 0,151 | 18,7 | 2,85 |
| R2     | 2,4 | 65 | 2,4 | 12,8 | 14,0 | 53,1 | 0,440 | 0,159 | 19,9 | 2,77 |
| R3     | 2,4 | 63 | 2,5 | 14,0 | 14,3 | 58,7 | 0,412 | 0,139 | 16,9 | 2,96 |
| R1     | 4,8 | 65 | 2,9 | –    | 14,5 | 56,9 | 0,411 | 0,141 | 19,0 | 2,91 |
| R2     | 4,8 | 66 | 3,0 | –    | 14,4 | 57,6 | 0,399 | 0,140 | 19,2 | 2,85 |

**Patentansprüche**

1. Ruß mit einer STSA-Oberfläche zwischen 20 und 180 m$^2$/g, einer 24M4-DBP-Absorption zwischen 40 und 140 ml/100 g und einer spezifischen BET-Oberfläche zwischen 20 und 250m$^2$/g und einem Gehalt von 0,01 bis 20 Gew.-% Silizium, bezogen auf sein Gesamtgewicht,
   **dadurch gekennzeichnet,**
   **daß** er in Gummimischungen ein Verhältnis von $\tan\delta_0/\tan\delta_{60}$ von größer 3,37-0,0068·STSA aufweist.

2. Ruß nach Anspruch 1,
   **dadurch gekennzeichnet,**
   **daß** er neben Silicium noch 0,01 bis 1 Gew.% Stickstoff enthält.

3. Verfahren zur Herstellung eines Rußes nach Anspruch 1 durch oxidative Pyrolyse von kohlenstoffhaltigen Rußrohstoffen,
   **dadurch gekennzeichnet,**
   **daß** als Brennstoff Rußöl, Öl, ein Öl/Erdgasgemisch oder Erdgas allein verwendet und die Verbrennung des Brennstoffes so geführt wird, daß sich Keime bilden und der Rußrohstoff unmittelbar mit diesen Rußkeimen in Kontakt gebracht wird und den kohlenstoffhaltigen Rußrohstoffen Silikonöl zugemischt wird.

4. Verfahren zur Herstellung eines Rußes nach Anspruch 3 durch oxidative Pyrolyse von kohlenstoffhaltigen Rußrohstoffen,
   **dadurch gekennzeichnet,**
   **daß** Silikonöl in die Brennkammer oder Reaktionskammer des Rußreaktors eingesprüht wird.

5. Verfahren nach den Ansprüchen 3 bis 5,
   **dadurch gekennzeichnet,**
   **daß** man durch Variation der Einmischung des Silikonöls in das Rußöl die Siliziumverteilung in dem Ruß beinflußt.

6. Verwendung des Rußes nach Anspruch 1 als Verstärkerruß in Gummimischungen, insbesondere für Reifen mit vermindertem Rollwiderstand und verbessertem Naßrutschverhalten.


**Claims**

1. Carbon black having an STSA surface area of from 20 to 180 m$^2$/g, a 24M4-DBP absorption of from 40 to 140 ml/100 g and a specific BET surface area of from 20 to 250 m$^2$/g and a content of from 0.01 to 20 wt.% silicon, based on its total weight,
   **characterised in that**
   it has a $\tan\delta_0/\tan\delta_{60}$ ratio greater than 3.37-0.0068·STSA in rubber mixtures.

2. Carbon black according to claim 1,
   **characterised in that**
   it contains, in addition to silicon, from 0.01 to 1 wt.% nitrogen.

3. Process for the preparation of a carbon black according to claim 1 by oxidative pyrolysis of carbon-containing carbon black raw materials,
   **characterised in that**
   carbon black oil, oil, an oil/natural gas mixture or natural gas alone is used as the fuel, and the combustion of the fuel is carried out in such a manner that seeds form, and the carbon black raw material is brought directly into contact with those carbon black seeds, and silicone oil is added to the carbon-containing carbon black raw materials.

4. Process for the preparation of a carbon black according to claim 3 by oxidative pyrolysis of carbon-containing carbon black raw materials,
   **characterised in that** silicone oil is sprayed into the combustion chamber or reaction chamber of the carbon black reactor.

5. Process according to claims 3 to 5,

**characterised in that**
the distribution of silicon in the carbon black is influenced by varying the mixing of the silicone oil into the carbon black oil.

6. Use of the carbon black according to claim 1 as a reinforcing carbon black in rubber mixtures, especially for tyres having reduced rolling resistance and improved wet skid behaviour.

**Revendications**

1. Noir de carbone présentant une surface STSA comprise entre 20 et 180 $m^2$/g, une absorption 24M4-DBP comprise entre 40 et 140 ml/100 g et une surface spécifique BET comprise entre 20 et 250 $m^2$/g, avec une teneur pondérale en silicium de 0,01 à 20 % par rapport au poids total,
   **caractérisé en ce que**
   ce noir présente dans les mélanges de caoutchouc un rapport $\tan\delta_0/\tan\delta_{60}$ supérieur à 3,37-0,0068 STSA.

2. Noir de carbone selon la revendication 1,
   **caractérisé en ce qu'**
   en plus du silicium, il contient de 0,01 à 1 % en poids d'azote.

3. Procédé de fabrication d'un noir de carbone selon la revendication 1, par pyrolyse oxydante de matières premières contenant du carbone,
   **caractérisé en ce qu'**
   on utilise comme combustible de l'huile de noir de carbone, de l'huile, un mélange d'huile et de gaz naturel ou du gaz naturel uniquement, et la combustion du combustible est conduite de manière qu'il se forme des germes de noir de carbone et que la matière première du noir de carbone soit directement amenée en contact avec ces germes, de l'huile de silicone étant ajoutée en mélange aux matières premières contenant du carbone.

4. Procédé de fabrication selon la revendication 3,
   **caractérisé en ce que**
   l'huile de silicone est introduite par pulvérisation dans la chambre de combustion ou dans la chambre de réaction.

5. Procédé de fabrication selon les revendications 3 et 4,
   **caractérisé en ce qu'**
   en faisant varier la quantité d'huile de silicone mise en mélange avec l'huile de noir de carbone, on influence la répartition de l'huile dans le noir de carbone.

6. Utilisation du noir de carbone selon la revendication 1,
   comme noir de renforcement dans des mélanges de caoutchouc, en particulier pour des pneumatiques présentant une moindre résistance au roulement et un meilleur comportement de dérapage sur sol mouillé.

*Figur 1*

*Figur 2*